# EUROPEAN PATENT SPECIFICATION

(11) **EP 3 072 829 B1**
(45) Date of publication and mention of the grant of the patent: **30.08.2017**
(21) Application number: 15161104.3
(22) Date of filing: 26.03.2015
(51) Int. Cl.: B65D 59/06, F16L 57/00, F16L 23/00

(54) **PROTECTOR FOR COVERING A TUBE FLANGE**
SCHUTZ ZUM ABDECKEN EINES ROHRFLANSCHES
DISPOSITIF PROTECTEUR DESTINÉ À RECOUVRIR UNE BRIDE DE TUBE

(43) Date of publication of application: 28.09.2016
(73) Proprietor: Brenning, Dieter, 21224 Rosengarten (DE)
(72) Inventor: Brenning, Dieter, 21224 Rosengarten (DE)
(74) Representative: Eisenführ Speiser

(56) References cited:
- EP-A1- 0 302 367
- FR-A1- 2 215 362
- GB-A- 2 145 070
- US-A- 1 934 681
- US-A1- 2008 072 989

## Description

The present invention is directed to a protector, in particular a flange protector for use with a flange which may be used, for instance, for making connections to pipes, valves, etc. The protector comprises a substantially round body being closed at its outer wall and its bottom, having an opening, and being suitable to be imposed with its opening on an exposed fitting in the form of a substantially round, flange-like disk, the body comprising means for a pre-fixation of the cap on the disk, wherein the outer wall has an inner surface having a lead portion and a fixture portion, and wherein the lead portion has a first inner diameter and the fixture portion has a second inner diameter, the first and second inner diameter being different, wherein the lead portion comprises an inwardly directed undercut projection. An example of such a protector is known from FR 2 215 362 A1. The invention is further directed to a method for protecting a fitting by such a protector. The term "fitting" is to be understood in a broad sense including outwardly directed adapters, hubs, flanges, in particular tube or pipe flanges, and moldings, which may be provided at the end of a tube or pipe.

Protectors are generally known in the prior art, for example in EP 0 302 367 A1, US 1,934,681 and US 4,799,716. EP 0 302 367 A1 describes a protecting cap to cover the flange of a tube, a flange at a vessel, at a valve or the like during transport and during storage until it is installed into a machinery. A disc is arranged at the flange and covers the bore and the recess of the flange. The disc is provided with a rim at the outer circumference, the rim projecting axially in respect of the disc. US 1,934,681 describes a protector for use with pipe ends that are to be joined by couplings. US 4,799,716 describes a protector for the inner ends of pipe connector hubs. The protector comprises a cup shaped body of resilient material, a circular inner end wall, an annular side wall extending from the free end of the side wall, and a conically shaped, annular outer end wall.

It is an object of the present invention to provide an enhanced protector and an enhanced method for protecting a fitting.

These objects are achieved by the subject-matters of the independent claims.

It has been discovered by the invention that during transportation and storage of fittings, in particular fittings of the kind mentioned above, a damage of the fitting might occur. The fittings may be scarred and mashed out of round, due to the weight of superposed loads, shifting of the fittings relatively to one another, and rough handling. Such damaging may destroy the fitting dimensions and, in turn, lead to leaky joints of connected pipes. Therefore, a protection of fittings for the above purposes is desirable.

Furthermore, it has been discovered by the invention that during the mounting of protectors of the prior art, in particular on comparatively large fittings (e.g. diameter > 0.5 m), challenges and problems are faced. In particular, it is a challenge to set the protector in the desired angle relative to the fitting in order to slide the protector onto the fitting while maintaining this angle. This problem arises in particular with protectors having a chamfered or beveled inner surface, since it happens easily that the protector is slid in an oblique way and, thereby, cants and bends. In this case, a removal of the protector is only possible by applying high forces. Furthermore, dimensions of the protector, which are designed to correspond to the fitting, might be destroyed due to the bending of the cap. It might even be necessary to dispose the bent protector and use a new protector in a further try to fix the cap on the fitting.

These problems and challenges are solved by the invention by providing a means for pre-fixation of the cap. An essential advantage of this solution is that during the mounting of the protector, the means for pre-fixation is slid onto the flange-like disk in a first mounting step. Thereby, a pre-fixation and positioning of the protector on the fitting is achieved. In a second mounting step, the protector is entirely slid onto the flange-like disk.

The protector according to the present invention is preferably provided in different sizes, each size fitting a corresponding size of a fitting to be covered. In other words, the dimensions are described herein mainly in relation to each other. The absolute dimensions, however, depend on the size of the fitting to be covered.

The bottom has a rounded, in particular circular surface. The size of this surface corresponds substantially to the front area of the fitting to be covered.

The outer wall preferably extends from the bottom, further preferably starting from an outer border of the bottom. Thereby, the outer wall preferably forms, at least in sections, an annular side wall, having a substantially cylindrical inner surface. Therefore, the protector preferably has a substantially cup shaped body. In mounted state, the cylindrical inner surface faces an outer surface of the fitting. Further preferably, the inner surface is smooth.

Preferably, the protector comprises or consists of a rigid or flexible material such as a plastic material, an elastomeric material and/or a silicone material.

In the claimed protector, the outer wall has an inner surface having a lead portion and a fixture portion, wherein the lead portion has a first inner diameter and the fixture portion has a second inner diameter, the first and second inner diameter being different. This provides for a solution having two portions at the inner surface each having a different function: a lead portion and a fixture portion. The lead portion has a first inner diameter, which substantially corresponds to or is greater than an outer diameter of the fitting to be covered. Preferably, the lead portion is slid onto the fitting during the first mounting step. Thereby, a pre-fixation and positioning of the protector on the fitting is achieved. In the second mounting step, the protector is entirely slid onto the flange-like disk such that the fixture portion accommodates the disk. Preferably, the fixture portion is dimensioned such that the protector is securely and, at the same time, detachably mounted and fixed to the fitting.

The fixture portion may have a second inner diameter, which substantially corresponds to the first inner diameter or is greater than the first inner diameter.

According to a preferred enhancement of the embodiment, the second inner diameter is smaller than the first inner diameter. Preferably, the second inner diameter corresponds to the outer diameter of the flange-like disk or is slightly greater than the outer diameter of the disk. This embodiment provides for a secure fixture of the protector, when the disk is accommodated by the fixture portion.

According to a further preferred enhancement of this embodiment, the first inner diameter substantially corresponds to an outer diameter of the fitting to be covered or is greater than an outer diameter of the fitting to be covered. Thereby, dimensions of the protector are provided by which an easy handling of the pre-fixation is achieved.

In another preferred enhancement of the embodiment, the outer wall has a thickness and a ratio between the thickness and a difference between the first and second inner diameter lies in the range from 1/4 to 3/4, preferably at approximately 1/2. The ratio of 1/2 is understood in a way that the thickness of the outer wall substantially corresponds to the difference between the radius of the first and second inner diameter. These dimensions provide for an enhanced design, which leads to an easy handling of the mounting process and, at the same time, a secure fixture of the protector on the disk.

According to a further preferred embodiment of the protector according to the present invention, a height of the protector is greater than a thickness of the flange-like disk. The part of the protector forming the excess height of the protector (compared to the thickness of the disk) preferably forms the means for pre-fixation.

In an enhancement, a ratio between the height of the protector and the thickness of the flange-like disk lies in the range from 1.5 to 5. These dimensions preferably provide for a pre-fixation means having a height greater than the thickness of the disk.

In a further enhancement, the ratio between the height of the protector and the thickness of the flange-like disk lies in the range from 1.75 to 2. These dimensions preferably provide for a pre-fixation means having a height being smaller than the thickness of the disk.

According to another preferred enhancement of the embodiment, the inner surface faces an outer surface of the flange-like disk in a mounted state.

In a further preferred enhancement of the embodiment, an inwardly directed projection is formed between the lead portion and the fixture portion. The term "between" can be understood herein and in the following in a way that the projection forms a separate portion in slide-on direction or that the projection forms part of the lead portion and/or part of the fixture portion. Preferably, the projection forms a transition between the lead portion and the fixture portion at the inner surface of the outer wall. Further preferably, the projection is formed rounded. Even further preferably, the projection is formed integral with the outer wall.

The fixture of the protector is carried out by pushing the protector onto the flange-like disk, wherein the projection slides over and beyond the flange-like disk. Therefore, the fixture portion has an extension (height) in slide-on direction, which substantially corresponds to or is greater than the thickness of the flange-like disk (in slide-on direction). The inner diameter of the projection is preferably smaller than the outer diameter of the flange-like disk. Therefore, the projection provides a secure seating of the protector on the flange-like disk.

In the protector according to the present invention, the lead portion comprises an inwardly directed undercut projection. An advantage provided by the undercut projection is that the pre-fixed protector is detachably secured, in particular pre-clamped, to the disk, in particular after the first mounting step and before the second mounting step. Without such undercut projection, the protector might fall off the disk if the mounting process is paused.

Preferably, the undercut projection is formed at a border of the outer wall, in particular at a front region of the outer wall in slide-on direction. Further preferably, the undercut projection has an acute tip formed by a first surface and a second surface. The acute tip is preferably elastic. This will further simplify and ease the mounting, in particular the pre-fixation, of the protector on the disk, since the elastic tip may elastically adjust its form to the flange-like disk while the protector is slid on, in the first mounting step.

The first surface is preferably a surface facing the disk in the moment when the protector is slid on the disk. The second surface is preferably a surface facing away from the disk in the moment when the protector is slid on the disk.

In the claimed protector, the undercut projection is formed circumferentially in sections. This can be understood such that a plurality of undercut projections is provided, each undercut projection extending in a section along the circumference and radially inwardly. An essential advantage of this enhancement - compared to the provision of one unbroken continuous undercut projection - is a high elasticity of the protector. This may lead to an elastic movement of the outer wall outwardly when the protector is slid on and fixed to the disk.

In a further preferred enhancement, an inner diameter of the projection is smaller than an inner diameter at a tip of the undercut projection. This provides for an easy pre-fixing of the protector.

In another preferred enhancement of the embodiment, the undercut projection is chamfered. Preferably, a surface, which faces the disk during sliding of the protector onto the disk, of the undercut projection is chamfered, in particular conically shaped. Further preferably, a surface of the undercut projection, facing away from the disk during sliding of the protector onto the disk, is directed substantially in a right angle relative to the inner surface of the outer wall.
The object mentioned above is achieved, according to a further aspect of the invention, by a method for protecting a fitting by a protector, comprising
a) performing a pre-fixation of the protector on the fitting having the form of a substantially round, flange-like disk, and
b) performing a final fixation of the cap on the fitting.
Preferred embodiments of the invention are described in connection with the figures, wherein
- FIG. 1: illustrates a cross-sectional view of a first embodiment of a protector according to the present invention in a first state,
- FIG. 2: illustrates the first embodiment depicted in Fig. 2 in a second state, and
- FIG. 3: illustrates a cross-sectional view of a second embodiment of the protector according to the present invention.

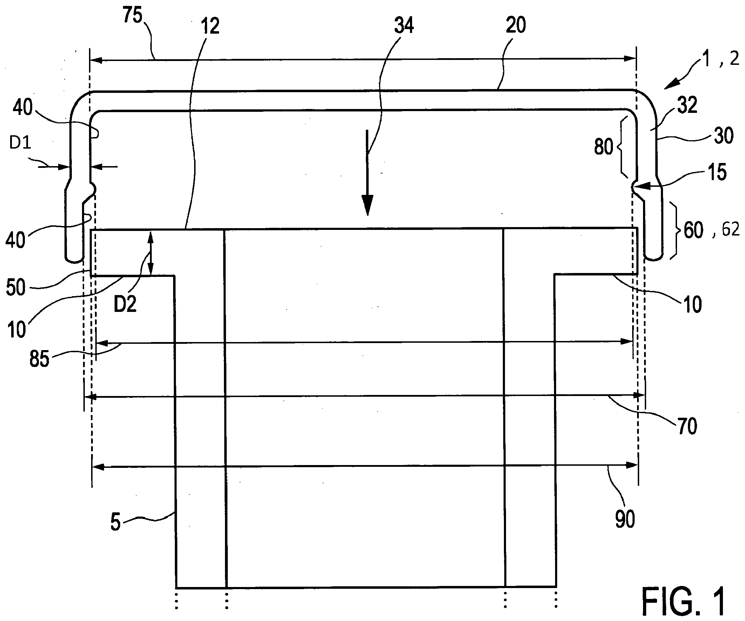

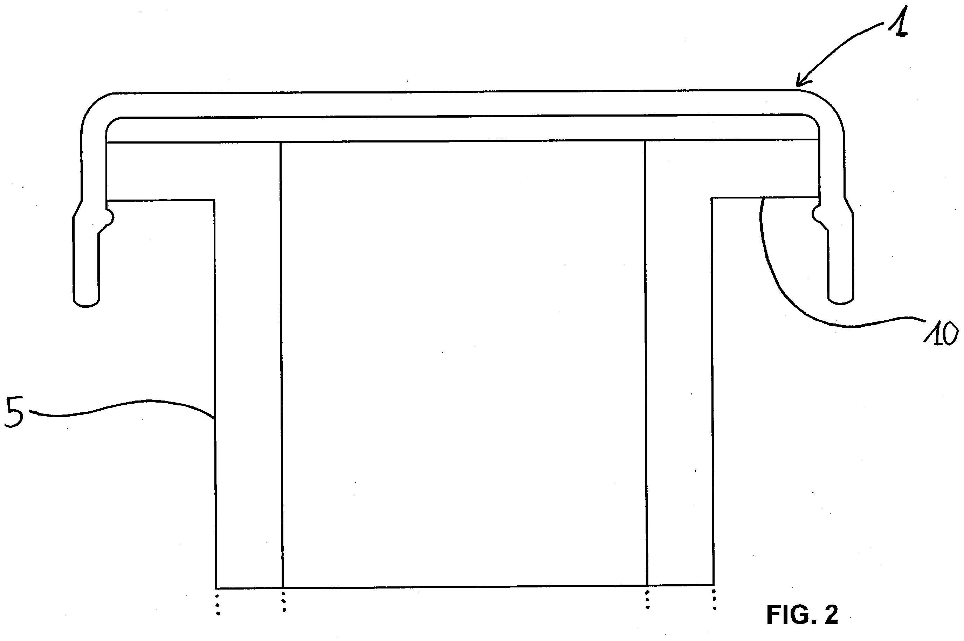

Figures 1 and 2 show a first embodiment of a protector 1 according to the present invention. The protector 1 substantially consists of a substantially round body 2 which is made of plastic material and which has been produced by means of injection molding. A cut line of the cross-sectional view lies substantially halfway through the width of the protector 1. Furthermore, an end portion of a tube 5 is shown in a cross-sectional view in Figures 1 and 2. The tube 5 has a fitting 8 in form of a tube flange 10, which forms a substantially round, flange-like disc 14. A face 12 of the tube flange 10 faces the bottom 20. The cut line of this view lies substantially halfway through the diameter of the tube 5.
The protector 1 has a bottom 20, consisting of a bottom wall 22, and an outer wall 32. The outer wall 32 extends from a border of the bottom wall 22 and in a direction perpendicular to the bottom wall 22. The outer wall 32 forms an opening 28 at one end, located opposite of the bottom 20. During the mounting of the protector 1, the outer wall 32 is directed substantially parallel to a slide-on direction 34, in which the protector 1 is slid on the tube flange 10. The outer wall 32 has a lead portion 60 and a fixture portion 80. The lead portion 60 acts as a means 62 for pre-fixation of the protector 1.

An inner surface 40 of the outer wall 32 has a first inner diameter 70 at the lead portion 60 and a second inner diameter 75 at the fixture portion 80. The first inner diameter 70 is slightly greater than the outer diameter 90 of the flange-like disk 14. The second inner diameter 75 is slightly smaller than the first inner diameter 70 and corresponds to the outer diameter 90 of the flange-like disk 14. The protector 1 has a height H. The outer wall 32 has a thickness D1 at the lead portion 60 and fixture portion 80. The flange-like disk 14 has a thickness D2.

At the inner surface 40, a rounded projection 15 is formed providing a transition between the lead portion 60 and the fixture portion 80. An inner diameter 85 of the projection 15 is smaller than the outer diameter 90 of the flange-like disk 14.

FIG. 1 shows the protector 1 and the tube flange 10 to be covered in a state during mounting of the protector 1 onto the flange-like disk 14. In a first mounting step, the protector 1 is slid onto the flange-like disk 14, as far as the lead portion 60 is able to receive the flange-like disk 14. Thereby, an appropriate positioning and pre-fixation of the protector 1 on the flange-like disk 14 is achieved. In a second mounting step, the protector 1 is further slid in slide-on direction 34 onto the flange-like disk 14, such that the projection 15 grinds over the outer surface 50 of the flange-like disc 14 and undercuts the flange-like disk 14 in the mounted state, as shown in FIG. 2. I.e. the mounted state represents an arrangement in which the fixture portion 80 accommodates the flange-like disk 14. The projection 15, while undercutting the flange-like disk 14, creates a secure, detachable fixture of the protector 1 on the tube flange 10.

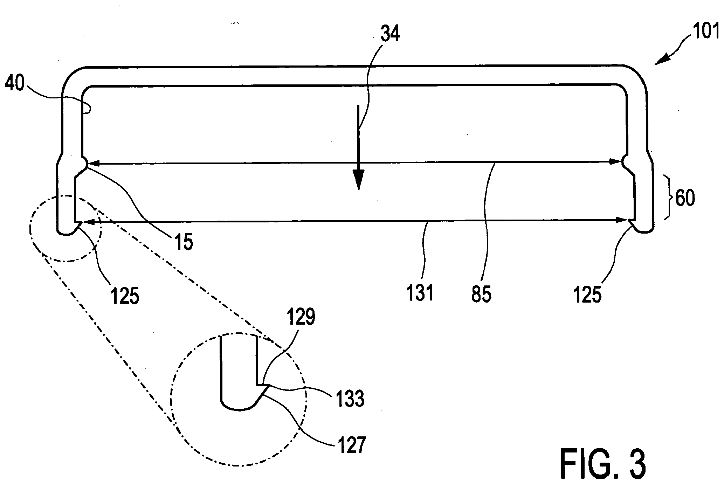

FIG. 3 shows a second embodiment of a protector 101 according to the present invention. The protector 101 shown in FIG. 3 is designed similar to the protector 1 shown in FIG. 1. The same and similar features are indicated by the same reference numerals.

The lead portion 60 has at its inner surface 40 an undercut projection 125. The undercut projection 125 has a chamfered surface 127 facing the tube flange 10, at least in the beginning of the mounting of the protector 1. Furthermore, the undercut projection 125 has an undercut surface 129 facing in an opposite direction to the slide-on direction 34. The undercut surface 129 is directed perpendicular to the inner surface 40 of the outer wall 32 in a non-mounted state. The inner diameter 85 of the projection 15 is smaller than the inner diameter 131 of the lead portion 60 at an inwardly directed tip 133 of the undercut projection 125.

### Reference numerals

- 1, 101: protector
- 2: body
- 5: tube
- 8: fitting
- 10: tube flange
- 12: face
- 14: flange-like disc
- 15: projection
- 20: bottom
- 22: bottom wall
- 28: opening
- 32: outer wall
- 34: slide-on direction
- 40: inner surface
- 50: outer surface
- 60: lead portion
- 62: means
- 70: first inner diameter
- 75: second inner diameter
- 80: fixture portion
- 85: inner diameter
- 90: outer diameter
- 125: undercut projection
- 127: chamfered surface
- 129: undercut surface
- 131: inner diameter
- 133: tip
- D1, D2: thickness
- H: height

## Claims

1. A protector, comprising
a substantially round body (2)
- being closed at its outer wall (32) and its bottom (20),
- having an opening (28),
- being suitable to be imposed with its opening (28) on an exposed fitting (8) in the form of a substantially round, flange-like disk (14),
- the body (2) comprising means (62) for a pre-fixation of the cap (1; 101) on the disk (14),
wherein the outer wall (32) has an inner surface (40) having a lead portion (60) and a fixture portion (80), and
wherein the lead portion (60) has a first inner diameter (70) and the fixture portion (80) has a second inner diameter (75), the first and second inner diameter being different, and
wherein the lead portion (60) comprises an inwardly directed undercut projection (125),
**characterized in that**
the undercut projection (125) is formed circumferentially in sections.

2. A protector according to claim 1,
wherein the second inner diameter (75) is smaller than the first inner diameter (70).

3. A protector according to any of the preceding claims,
wherein the outer wall (32) has a thickness (D1) and
wherein a ratio between
- the thickness (D1) and
- a difference between the first (70) and second inner diameter (75) lies in the range from 1/4 to 3/4 , preferably at approximately 1/2.

4. A protector according to any of the preceding claims,
wherein the inner surface (40) faces an outer surface (50) of the flange-like disk (14) in a mounted state.

5. A protector according to any of the preceding claims,
wherein an inwardly directed projection (15) is formed between the lead portion (60) and the fixture portion (80).

6. A protector according to claim 5,
wherein an inner diameter (85) of the projection (15) is smaller than an inner diameter (131) at a tip (133) of the undercut projection (125).

7. A protector according to any of the preceding claims,
wherein the undercut projection (125) is chamfered.

8. Method for protecting a fitting by a protector according to any of the preceding claims, comprising
(a) performing a pre-fixation of the protector (1; 101) on the fitting (8) having the form of a substantially round, flange-like disk (14), and
(b) performing a final fixation of the protector (1; 101) on the fitting (8).

## Patentansprüche

1. Schutzkappe, umfassend
einen im Wesentlichen runden Grundkörper (2),
- der an seiner Außenwand (32) und seinem Boden (20) geschlossen ist,
- mit einer Öffnung (28),
- der ausgebildet ist, mit seiner Öffnung (28) über ein auskragendes Anschlussteil (8) gestülpt zu werden, das die Form einer im Wesentlichen runden, flanschartigen Scheibe (14) aufweist,
- wobei der Grundkörper (2) Mittel (62) zur Vorfixierung der Kappe (1; 101) auf der Scheibe (14) umfasst,
wobei die Außenwand (32) eine Innenoberfläche (40) mit einem Führungsabschnitt (60) und einem Befestigungsabschnitt (80) aufweist, und
wobei der Führungsabschnitt (60) einen ersten Innendurchmesser (70) und der Befestigungsabschnitt (80) einen zweiten Innendurchmesser (75) aufweist, wobei der erste und zweite Innendurchmesser unterschiedlich sind, und
wobei der Führungsabschnitt (60) einen nach innen gerichteten Hinterschneidungsvorsprung (125) umfasst,
**dadurch gekennzeichnet, dass**
der Hinterschneidungsvorsprung (125) in Umfangsrichtung abschnittsweise ausgebildet ist.

2. Schutzkappe nach Anspruch 1,
wobei der zweite Innendurchmesser (75) kleiner ist als der erste Innendurchmesser (70).

3. Schutzkappe nach einem der vorherigen Ansprüche,
wobei die Außenwand (32) eine Dicke (D1) aufweist und das Verhältnis zwischen
- der Dicke (D1) und
- einer Differenz zwischen dem ersten (70) und dem zweiten Innendurchmesser (75) in der Spannweite von 1/4 bis 3/4 liegt, bevorzugt bei ungefähr 1/2.

4. Schutzkappe nach einem der vorherigen Ansprüche,
wobei die Innenoberfläche (40) im montierten Zustand einer Außenoberfläche (50) der flanschartigen Scheibe (14) gegenüberliegt.

5. Schutzkappe nach einem der vorherigen Ansprüche,
wobei ein nach innen gerichteter Vorsprung (15) zwischen dem Führungsabschnitt (60) und dem Befestigungsabschnitt (80) ausgebildet ist.

6. Schutzkappe nach einem der vorherigen Ansprüche,
wobei ein Innendurchmesser (85) des Vorsprungs (15) kleiner als ein Innendurchmesser (131) an der Spitze (133) des Hinterschneidungsvorsprungs (125) ist.

7. Schutzkappe nach einem der vorherigen Ansprüche,
wobei der Hinterschneidungsvorsprung (125) abgeschrägt ist.

8. Verfahren zum Schutz eines Anschlussteils mit einer Schutzkappe nach einem der vorherigen Ansprüche, umfassend
(a) Durchführen einer Vorfixierung der Schutzkappe (1; 101) auf dem Anschlussteil (8), das die Form einer im Wesentlichen runden, flanschartigen Scheibe (14) aufweist, und
(b) Durchführen einer endgültigen Fixierung der Schutzkappe (1; 101) auf dem Anschlussteil (8).

## Revendications

1. Dispositif de protection comprenant :
un corps sensiblement rond (2) :
qui est fermé au niveau de sa paroi externe (32) et de son fond (20),
qui a une ouverture (28),
qui est approprié pour être imposé avec son ouverture (28) sur un raccord exposé (8) se présentant sous la forme d'un disque en forme de bride, sensiblement rond (14),
le corps (2) comprenant un moyen (62) pour une pré-fixation du capuchon (1, 101) sur le disque (14),
dans lequel la paroi externe (32) a une surface interne (40) ayant une partie d'attaque (60) et une partie de fixation (80), et
dans lequel la partie d'attaque (60) a un premier diamètre interne (70) et la partie de fixation (80) a un second diamètre interne (75), les premier et second diamètres internes étant différents, et
dans lequel la partie d'attaque (60) comprend une saillie dégagée (125) dirigée vers l'intérieur,
**caractérisé en ce que** :
la saillie dégagée (125) est formée, de manière circonférentielle, en sections.

2. Dispositif de protection selon la revendication 1,
dans lequel le second diamètre interne (75) est inférieur au premier diamètre interne (70).

3. Dispositif de protection selon l'une quelconque des revendications précédentes,
dans lequel la paroi externe (32) a une épaisseur (D1), et
dans lequel un rapport entre :
l'épaisseur (D1), et
une différence entre le premier (70) et le second diamètre interne (75) est dans la plage de ¼ à ¾, de préférence approximativement ½.

4. Dispositif de protection selon l'une quelconque des revendications précédentes,
dans lequel la surface interne (40) fait face à une surface externe (50) du disque en forme de bride (14) dans un état monté.

5. Dispositif de protection selon l'une quelconque des revendications précédentes,
dans lequel une saillie (15) dirigée vers l'intérieur est formée entre la partie d'attaque (60) et la partie de fixation (80).

6. Dispositif de protection selon la revendication 5,
dans lequel un diamètre interne (85) de la saillie (15) est inférieur à un diamètre interne (131) au niveau d'une pointe (133) de la saillie dégagée (125).

7. Dispositif de protection selon l'une quelconque des revendications précédentes,
dans lequel la saillie dégagée (125) est chanfreinée.

8. Procédé pour protéger un raccord par un dispositif de protection selon l'une quelconque des revendications précédentes, comprenant les étapes suivantes :
(a) réaliser une pré-fixation du dispositif de protection (1 ; 101) sur le raccord (8) ayant la forme d'un disque en forme de bride sensiblement rond (14), et
(b) réaliser une fixation finale du dispositif de protection (1 ; 101) sur le raccord (8).
